(19) Europäisches Patentamt
European Patent Office
Office européen des brevets

(11) **EP 1 916 342 A1**

(12) **EUROPEAN PATENT APPLICATION**

(43) Date of publication:
**30.04.2008 Bulletin 2008/18**

(51) Int Cl.:
*E02D 29/14* (2006.01)   *E02D 29/12* (2006.01)
*H02G 9/10* (2006.01)

(21) Application number: **06255494.4**

(22) Date of filing: **25.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(71) Applicant: Uponor Innovation AB
**513 81 Fristad (SE)**

(72) Inventors:
• **The inventor has agreed to waive his entitlement
to designation.**

(74) Representative: **Lunt, Mark George Francis et al
Harrison Goddard Foote,
Fountain Precinct
Balm Green
Sheffield S1 2JA (GB)**

(54) **Chamber riser**

(57)     A riser (30,30') for a chamber (10) comprises at
least one side element (42) and at least one corner ele-
ment (32a,b). Each element has two ends (39,41) and
each end has fingers (34,36a,b) to interdigitate with the
fingers of an adjacent element. The elements are ar-
rangeable to form a closed ring section in any one of at
least two dispositions, depending on the degree of inter-
digitation of the fingers.

The side element may be a corner element, and there
may be four of them.

Fig. 4a

Fig. 4b

**Description**

This invention relates to a riser for an underground chamber. A riser adjusts the height of the chamber, for example to accommodate resurfacing of a roadway, footway or other area (hereinafter "roadway") in which the chamber is disposed. It is also desirable if a riser can adjust the inclination of the surface of the chamber to match the roadway in which the chamber is situated.

BACKGROUND

Chambers made from plastics are now commonly employed, particularly for telecommunications junctions. Indeed, chambers may be constructed in one piece, such as disclosed in EP-A-0641897. That document discloses a support ring for a lid, which ring also forms a riser when the height of the lid needs raising in the event that the road surface is re-paved, raising its level. The ring can also be omitted.

US-A-5542780 discloses a chamber made from a stack of ring shaped sections. Each section constitutes a riser, since adding further sections is perfectly possible. On the other hand each section is relatively thick, and therefore very likely to be greater than the raised roadway level following repaving.

WO-A-9802617 discloses a modular dismountable box that comprises elements connectable together to form ring-shaped sections, which can then be stacked upon each other. GB-A-2342676 shows a similar arrangement in which the layers formed may be of different heights, rendering the final surface height easier to adjust. Nevertheless, small height adjustments are still needed, particularly once chambers are in situ and the roadway in which the chamber is disposed is being resurfaced.

Chambers come in many different sizes, but any one manufacturer is likely to have a range of sizes available, whether these be single, integral chambers, sectioned chambers or completely modular chambers. Each size presently requires its own riser for height adjustment, although height and slope adjustments are commonly made with tiles and mortar, or other materials, and not with risers. It would be convenient if multiplicity of parts could be reduced and it is therefore an object of the present invention to provide a riser which meets this objective.

BRIEF SUMMARY OF THE DISCLOSURE

In accordance with the present invention, there is provided a riser for a chamber comprising a plurality of riser elements including at least a first, corner element and a second, side element, each of said elements having two opposite ends, each end being provided with fingers, whereby said elements are arrangeable with respect to one another to form a closed ring section in any one of at least two dispositions, in which dispositions a said corner element is disposed abutting a said side element, and where said side and corner elements abut, said fingers interdigitate to a maximal extent in a first, small-size of said two dispositions and in a second, large-size of said two dispositions, said fingers interdigitate a minimal amount being less than in said first disposition.

Preferably, said side elements are identical to said corner elements. By identical is meant that they are essentially the same except for any mirroring of the respective interdigitating parts of each element. Preferably, said corner elements are L-shaped, having a long side-arm connected with a short end-arm. In this event, at least four elements are required to form a complete rectangle, in four possible different shapes and sizes.

Thus, a first disposition of the elements provides a long, wide rectangle, when said interdigitation is to a minimal extent between all said elements, and when side-arms of each corner element face side-arms of the next corner element, and end-arms face end-arms.

A second disposition provides a long, thin rectangle when the elements are disposed as in the first disposition, but wherein the end-arms are interdigitated to a maximal extent and the side-arms to said minimal extent.

A third disposition provides a short, wide rectangle when the corner elements are disposed as in the first and second dispositions, but wherein the end-arms are interdigitated to said minimal extent and the side-arms to a maximal extent.

Finally, a fourth disposition provides a short, thin rectangle when the corner elements are disposed as in the first and second dispositions, but wherein the end-arms are interdigitated to said maximal extent and the side-arms are also interdigitated to a maximal extent.

Preferably, the possible extent of interdigitation of the side-arms is greater than the possible extent of interdigitation of the end arms. In this way the difference in the length of the rectangles formed in the first and second dispositions as against the third and fourth dispositions is greater than the difference in the width of the rectangles formed in the first and third dispositions as against the second and fourth dispositions. Whether this feature is desirable depends on the different shapes of chamber on which the riser elements are designed to fit. Since rectangular chambers of different size tend to have a constant aspect, the long sides in larger chambers tend to be longer by a greater amount than are the shorter sides.

Preferably, said fingers interdigitate transversely across said arms, whereby between adjoining elements, one provides an outside finger, with respect to the outside edge of the riser, and the other provides an inside finger. In this event, adjacent corner and side elements cannot be identical, even if the side element is, in fact, another corner element. Preferably, each element has two fingers at each of its ends, an outside finger and a middle finger, or an inside finger and a middle finger.

A particularly preferred arrangement provides a riser as defined above comprising four corner elements in two pairs thereof, one pair having outside fingers and middle fingers, and the other pair having inside fingers and middle fingers. Preferably, there are two fingers on each end of each element.

Preferably, said minimal extent of interdigitation includes a degree of interdigitation, whereby there is no straight-line gap from inside to outside the riser between the ends of adjacent elements.

Preferably, said riser elements further comprise location lugs that are arranged so as to correspond with surface features of a chamber for which the riser is intended to fit. Such lugs, when the riser is fitted on the chamber, are adapted to engage with said surface features and lock the riser laterally on the top of the chamber.

Thus, the invention also provides a combination of a chamber and a riser therefor as defined above, the chamber comprising walls having a rectangular-ring shaped top edge that has surface features engaged by said lugs of the corner and side elements of the riser, whereby lateral movement of the riser elements and chamber is prevented.

Preferably, said lugs comprise pegs in a bottom surface of said elements and said surface features of the chamber comprise apertures in said top edge. Preferably, each element has at least two pegs. Preferably, said elements each have apertures in a top surface of said elements, whereby further elements stacked on a riser as defined herein are laterally locked with respect to the riser by interengagement of said lugs of said further elements and said apertures on the riser below.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

BRIEF DESCRIPTION OF THE DRAWINGS

Embodiments of the invention are further described hereinafter, by way of example, with reference to the accompanying drawings, in which:

Figure 1 is a perspective view of a riser in accordance with the present invention in a first disposition;
Figure 2 is a similar view of the riser of Figure 1, but in a second disposition;
Figure 3 is a perspective view of the riser of Figure 1 in combination with a chamber comprising stacked sections, the inset to Figure 3 showing a straight connector for further enlarging the riser;
Figures 4a and b are plan views of a contracted and expanded riser of an alternative embodiment of the present invention;
Figures 5a and b are enlarged details taken from Figures 4a and b respectively;
Figures 6a and b are plan views of a contracted and expanded riser of a presently preferred embodiment of the present invention; and
Figures 7a and b are enlarged details taken from Figures 5a and b respectively.

DETAILED DESCRIPTION

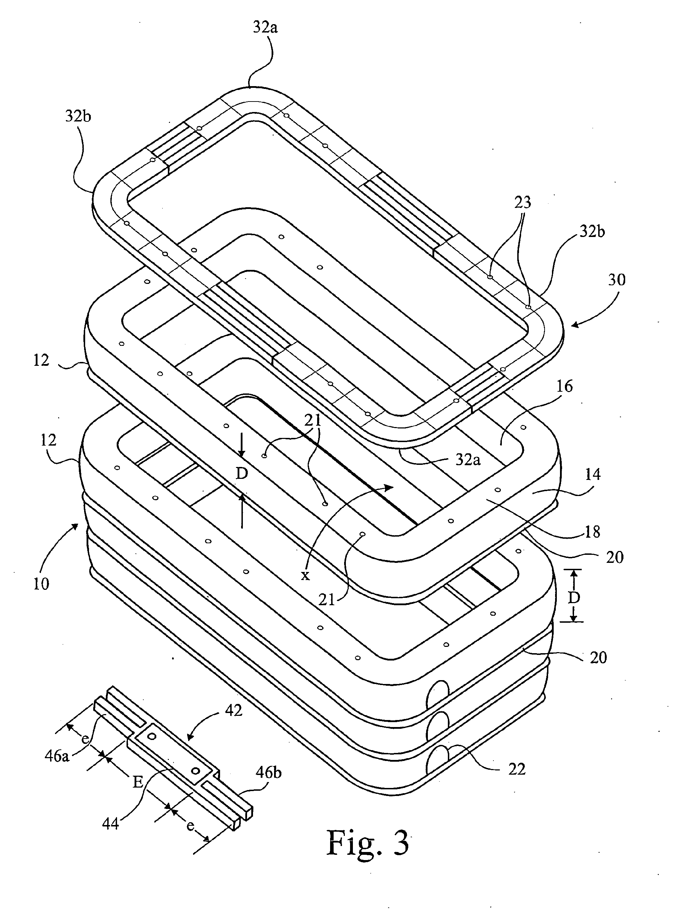

Referring to Figure 3, a chamber presently available from the present applicant and sold under the brand Quadbox is an access chamber 10 for use in all types of buried networks and utilities. The chamber 10 comprises a plurality of stacked sections or segments 12, made from twin walled plastics mouldings. Each segment 12 comprises an external wall 14, an internal wall 16, and a top edge or surface 18. The top edge 18 is substantially horizontal when the section 12 is placed on level ground. The walls 14,16 are bridged by ribs (not shown) so that the section overall is relatively rigid and can support street loads. Each segment has a lip 20, which lip overlaps, and thereby locks transversely with, the top edge 18 of the segment below it. Each section 12 is provided with various cut out templates 22. These facilitate drilling/cutting of apertures and ports to receive pipes, tubing and cables that enter the box 10 formed by the stacked sections.

When first laid in a hole in the ground, the base of the chamber will normally comprise a concrete floor whose level is arranged to be beneath the roadway level by a precise number of depths (D in Figure 3) of sections 12 so that, when a final frame (not shown) is placed on the top edge 18 of the top-most section 12, a lid received in the frame will be flush with the ground surface.

However, several situations call for small-scale adjustments to be made. A first is when the floor of the chamber is already in place when the chamber is first assembled. In which event, the correct depth may not be a precise number of depths (D) of the sections 12. Small adjustments might need to be made, although, conveniently, these can be effected by raising the floor, prior to laying the first section, and so that the topmost section is at the right level. Indeed, this is preferred, since the floor level would be raised by a layer of concrete on and in which the bottom tier of the chamber can be bedded. Not only does this ensure the height of the chamber, but also it secures and supports the base of the chamber so that the opportunity for spreading or movement under load is reduced. Nevertheless, it may still be convenient to have purpose built elements available to raise the height of the chamber 10 in this eventuality.

A second circumstance is where, after a chamber 10 has been in situ for some time and the roadway level is to be raised slightly by the laying of a new asphalt layer. In this case, the chamber is already in place in the ground and, unless the chamber is to be completely extracted, a riser element is necessary.

A third circumstance is where a chamber cannot be lowered into the ground any further than an underneath obstruction permits. For example, a utility pipe may be deep in the ground but a telecommunications cable is (to be laid) above it and a chamber is needed in the ground above the existing pipe. It may be desirable to have the chamber as deep as possible above the obstacle, but the obstacle may not permit a whole number of depths (D) of the sections to be fitted. A small-scale adjustment may therefore be necessary.

A fourth circumstance occurs where a communications duct is already in place in the ground and it is desired to install a chamber at a location along its length, for example if a new subscriber is to be connected to the existing cable network. In this situation, the height of the appropriate cut-out 22 is predetermined by the depth of the existing cable. It is true that there may be circumstances in which the ground may be excavated beyond the ends of the chamber so that the cable has some vertical flexibility. On the other hand, however, there may equally be circumstances where such is not possible. In this event, although it may be possible to feed a section 12 under the cable in the excavation, or even to cut one section in half and feed its parts separately underneath the cable and reassemble the section there, the height of the exit and entry of the cable into the final chamber is fixed. This might not leave the topmost section level with the ground.

It is well known to employ a ring that provides a small uplift in the top surface of a chamber. (See, for example EP-A-0641897). However, the present invention proposes a riser 30 that, in the embodiments shown in the present drawings, each comprises four separate corner elements 32a,b. Each corner element 32a is identical; likewise corner elements 32b are identical. Each element has a long arm 38, and a short arm 40.

Corner elements 32a differ from corner elements 32b by virtue of respective fingers 34,36 on the ends 39,41 of their respect arms 38,40.

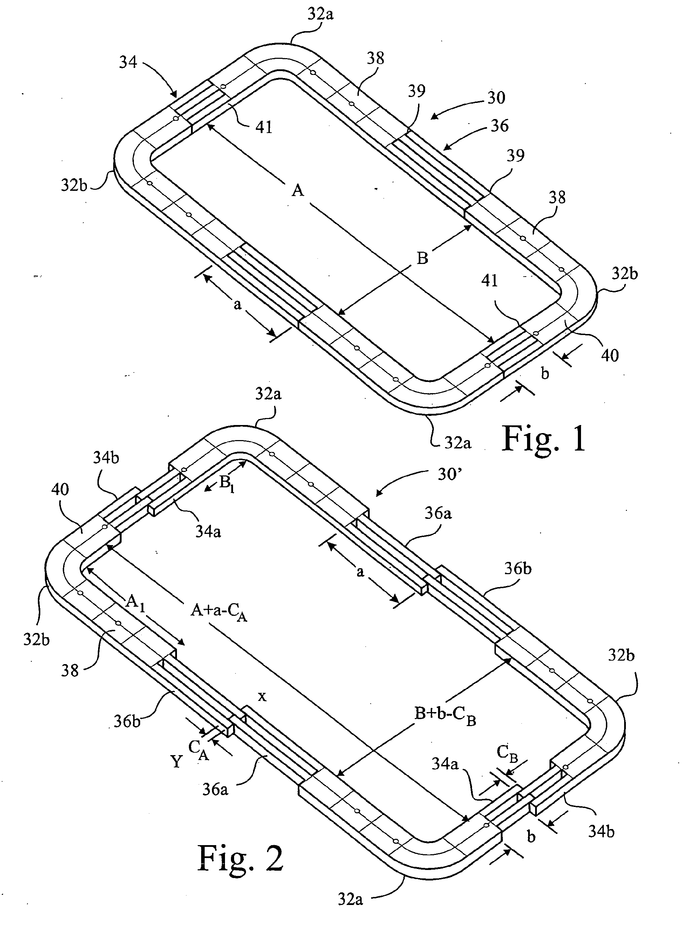

As can be seen through a comparison of Figures 1 and 2, the respective fingers 34,36 are arranged to be capable of interdigitating with respect to one another. When the interdigitation is to a maximal extent, as shown in Figure 1, the resultant riser 30 forms a short, thin rectangle of length A and width B. However, when the respective fingers are interdigitating to a minimal extent, as shown in Figure 2, a long, wide rectangle is formed of length $(A + a - C_A)$ and width $(B + b - C_B)$ where a is the length of the fingers 36, b is the length of the fingers 34, and $C_A$ and $C_B$ are the residual degrees of overlap or interdigitation between the respective fingers 36,34. Indeed, the increase in length of the riser 30' shown in Figure 2 is preferably slightly less than the length of the fingers 36 so that this residual degree $C_A,C_B$ of interdigitation remains and only a labyrinthine path exists from inside (X) the riser 30' to outside (Y).

The fingers 34,36,a,b are preferably rectangular in section so that they slide against one another and, between them, they form a support surface, contiguous with the remainder of the riser, and which is continuous in the direction of the fingers. Obviously, that support is unbroken when the degree of interdigitation is maximal, but nevertheless is sufficient when the interdigitation is minimal.

There are two fingers 34,36 on each end 39,40 of the elements 32a,b. The elements 32a have inside and middle fingers 34,36a, while the elements 32b have outside and middle fingers 34,36b. Thus the elements 32a may be considered "inside" elements, and the elements 32b as "outside" elements. Outside elements must mate with inside elements, and vice versa.

The purpose of the riser 30 is well understood, and this is to raise the top level of the chamber 10 by a small amount, such as, perhaps, 12 mm. The dimensions of the riser 30 are arranged to fit the dimensions of the chamber 10. The riser needs to be securely located on the top edge 18 of the chamber 10, and not be liable to drift from its proper position. The elements 32,a,b could, conceivably, be provided with lips (not shown) corresponding with (or probably smaller than) the lips 20 of the normal sections 12, and so as to overlap with the section beneath it. However, it is to be noted that, with an integral ring section, such as the section 12, only an external lip 20 is required for all-round stability. Indeed, this is preferred, so that the interior X of the chamber is bounded by smooth walls. However, the riser 30,30' is not a single, integral element. While movement externally is unlikely (by virtue of the back-fill of the chamber), and movement internally would be prevented by a single lip, nevertheless, a more secure location, during assembly for instance, is preferred.

The top surfaces 18 of chamber sections 12, (at least of Quadbox chambers mentioned above) are provided with spaced apertures 21. To correspond therewith, the riser elements 32a,b are provided with at least two pegs (not visible in the drawings) on their undersides. When an element 32a,b is fitted onto a corner of the chamber 10, the pegs locate in the apertures 21. Therefore no lip is, in fact, required on the riser elements 32a,b, since the interaction of the pegs and apertures locates the riser on the top edge 18 of the chamber 10. Indeed, recesses 23 on the top surface of the elements 32a,b are formed with the pegs, so that subsequently placed riser elements can be securely located by engagement of their pegs with the recesses 23 of the riser beneath.

The elements are conveniently moulded from plastics material. The mould (not shown) in which they are moulded may comprise a core element that forms the recesses 23 and a bore opposite the core which forms the pegs. Conveniently, the mould separates in a direction parallel the common axis of the core and bore.

Manufacturers of chambers 10 supply them in different sizes. For example, the Quadbox chambers referred to above are supplied in the following lengths and widths (dimensions given in mm are inside edges of the chamber).

| Code | Length A | Width B |
|---|---|---|
| Q300 | 300 | 300 |
| Q600 | 600 | 450 |
| Q725 | 725 | 255 |
| Q915 | 915 | 445 |
| Q1310 | 1310 | 610 |

Hitherto, it would be necessary to provide five different risers to accommodate these five different sizes. However, while separate risers are required for Q300 and Q725 models, a single pair of elements 32a,b can provide a riser for both Q600 and Q915 size models, in which:

$A_1$, the length of the long arm, = 135 mm;
a, the finger length of the long arm, = 330 mm;
$B_1$, the length of the short arm, = 150 mm;
b, the finger length of the short arm, = 80 mm;

Thus,

$$A_{Q600} = 2A_1 + a = 600,$$

or

$$A_{Q915} = 2A_1 + 2a - C_A = 915, \text{ where } C_A = 15;$$

and

$$B_{Q600} = 2B_1 + 2b - C_{B1} = 445, \text{ where } C_{B1} = 15,$$

or

$$B_{Q915} = 2B_1 + 2b - C_{B2} = 450, \text{ where } C_{B2} = 10.$$

Moreover, a single straight connector 42, as shown in the inset to Figure 3, can extend the application of the riser elements as described above to the Q1310 model. Here, the connector 42 has a body 44 of length E, and fingers 46a, b, of length e. It is to be noted that the fingers alternate on each end of the body 44 so that the connector fits between corner elements on both the sides and the ends of the chamber 10.

Thus, if E = 150 mm and e = 80 mm then, with two connectors on each long side of a Q1310 chamber, and one on each end, the corresponding dimensions of the riser (not shown assembled) are:

$$A_{Q1310} = 2A_1 + 2a + 2E + e = 1310;$$

and

$$B_{Q1310} = 2B_1 + 2b + E = 610$$

Of course, these dimensions are exemplary and theoretically suitable for the chambers described above. Different dimensions would be required for different chambers. Whether existing chambers have the complementarity to employ such riser elements between different sizes of chamber depends on their respective dimensions; for example, their respective wall thicknesses, as well as the disposition of surface features such as the apertures 21.

The elements 32 are corner elements of a riser system in accordance with the invention. The straight connectors 42 are side elements of the system. However, it should be understood that, in some arrangements, a side element is integrated with a corner element, as for example described above with respect to the Quadbox Q600 arid Q915 size systems that consists only of corner elements. Put another way, of four corner elements employed above, two of the corner elements can be regarded as (ie constituting) side elements of the invention, while the two remaining elements constitute the corner elements of the invention.

It would also be possible, and within the ambit of the present invention, and if some boxes of different sizes had at least one side of identical length, to employ riser elements that were U-shaped, that is to say, just two U-shaped elements (ie one "side element" and one "corner element" of the invention, even if they are both identical), with the fingers of their respective arms either maximally interdigitated, to form a relatively square riser, or minimally interdigitated to form a more rectangular riser. Thus the minimum requirement for the system of the present invention is two elements that have ends which interdigitate with one another along parallel lines. Although such elements would be identical, nevertheless, for the purposes of the present invention, one constitutes a corner element while the other a side element.

Another important application of the riser element in accordance with the present invention is to accommodate slopes in the roadway - or indeed, inclinations of the chamber on horizontal surfaces, although this would not be a desirable arrangement. A chamber is preferably arranged vertically in a roadway. However, the roadway may not itself be horizontal. In these circumstances it is normal to bed a frame that receives a chamber cover, not directly on the chamber walls, but on a mortar layer which is depth adjusted to match the chamber wall and road-surface inclinations. It is well known that mortar should not be laid beyond a predetermined thickness, otherwise there is a danger of slumping and/or subsequent cracking. Consequently, the corner elements of the present invention permit just parts of the chamber wall to be raised at that end or side of the chamber which is uphill with respect to the inclined roadway.

For this purpose, it is preferred if the surface of the riser elements is roughened, pitted or provided with burrs, so that it better keys with mortar. Thus, for example, where the chamber is laid vertically in sloping ground, at the uphill end of the chamber, two corner pieces may be placed, while none is placed at the downhill end. Mortar is then laid around the entire rim of the chamber over the corner units and so that it has an average depth not exceeding a desired limit. The cover frame is then bedded on the mortar at the correct height.

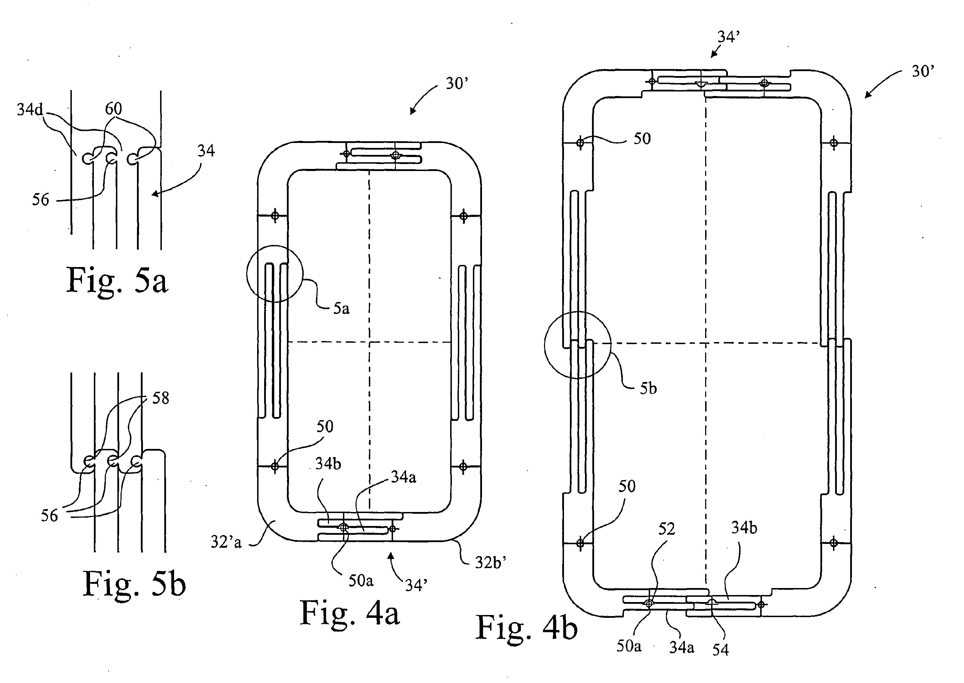

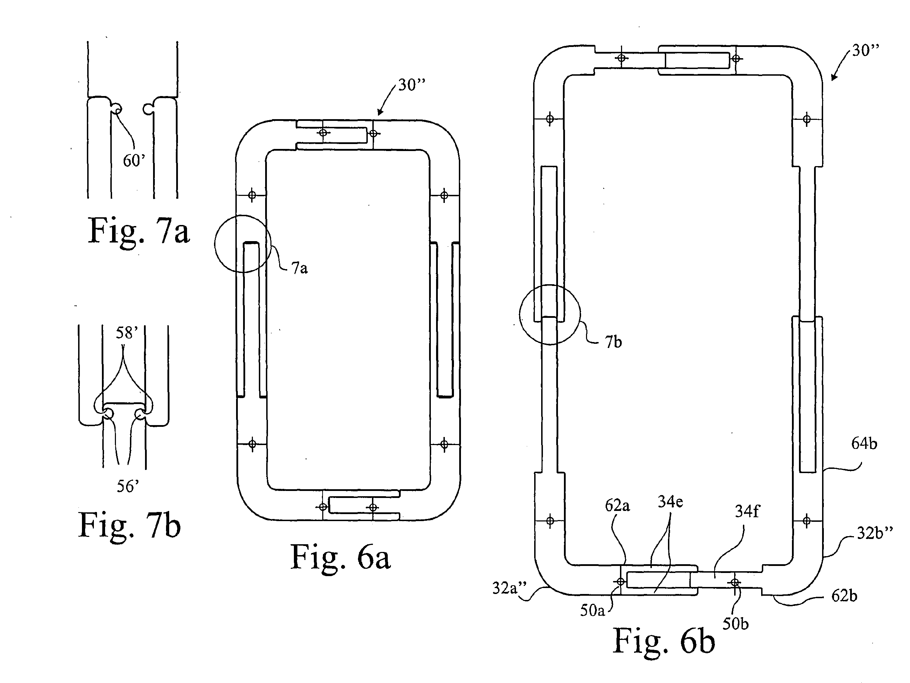

Finally, turning to Figures 4 to 7, two further embodiments of the invention are illustrated. Here, it is recognised that two popular versions of telecommunications chambers in the table above are the Q915 and Q1310, these sizes being typical throughout the industry, at least in the UK. Thus risers 30' and 30" in Figures 4a,b and 5a,b vary in size between 1310x610 mm and 915x445 mm. Also, riser 30' (Figure 4a,b) differs in structure from riser 30 (Figures 1 to 3) in that the fingers 34 at the ends are not central with respect to the centre line of the chamber. The reason for this is that, instead of pegs, the riser elements are provided with apertures 50 adapted to receive separate pegs for engagement with the holes 21 of the chamber sections 12. Different lengths of pegs can be employed depending on how many layers of risers 30' are being employed. However, because the apertures 21 at the ends of the chambers are spaced as they are in the Q915 and Q1310 chambers, the apertures 50 would overlap the fingers 34 when they are long enough to accommodate the difference in width between the two chambers. By offsetting, this coincidence of the fingers and apertures is restricted to just one set of fingers on corner elements 32a'. The finger 34a, in which the aperture 50a is disposed, is misshapen as a result, having a bulge 52 in its side. The finger 34b has an indentation 54 to receive the bulge 52 when the riser is in the maximal overlap position of Figure 4a. A problem with this arrangement, explaining the alternative embodiment of Figures 6a,b described further below, is that precision is required of the size of the elements 32a'b' so that they fit together in the maximal overlap position both with appropriate engagement of the bulge 52 and indent 54, and clean registry of the apertures 50 with the holes 12. There is no minor adjustment capability. This problem is exacerbated if another preferred feature is employed, as shown in Figures 5a and b. Here, the ends of the fingers 34 are provided with dovetailed bulges 56 and recesses 58 purely for the purpose of linking them together to improve their integrity. Of course, this also necessitates recesses 60 at the roots 34d of the fingers 34, so that the bulges 56 can be accommodated in the maximal interdigitation position. Of course, there is no technical difficulty in making these components accurately.

Nevertheless, if such precision was not desired, the shape of the fingers 34 could be changed to that as shown in Figures 6a,b and 7a,b. Here, corner 32a" is provided with two thin, outside fingers 34e, at one end 62a, and a single, thick central finger 34f at its other 64a. Corner piece 32b" corresponds. The fingers at the ends 62a,b of the corner elements 32a",b" are still off centre, but the apertures 50 a, b can be accommodated without the necessity of bulges. Consequently, this arrangement provides some flexibility in positioning between adjacent elements 32.

However, like the arrangement of Figures 4a,b and 5a,b, this arrangement can also be provided with end-ties, such as dovetail bulges 56', and corresponding slots 58',60', if precision is not considered an issue.

While the embodiments of Figures 4 to 7 above are described as having apertures to receive separate pegs, and the embodiments of Figures 1 to 3 have been described as having integral dependent pegs in a lower surface, with corresponding recesses in an upper surface, either arrangement is potentially equally possible with any embodiment. Moreover, there is no special relevance to the thickness of the respective fingers of the invention, and these may be selected as deemed appropriate in the circumstances. It is preferred that there is at least one "entrapment" of one set of fingers (ie one element has at least two fingers to receive an interdigitating finger of the other element. However, at its limit, only one finger on each element may be provided, as in a pair of engaging rabbets. This still provides support for the frame of the cover around its entire periphery. Indeed, it is even possible, although not ideal, to have the rabbets arranged vertically. However, this results in an unsupported section between the end of one element and a bridge where the overlap between the top and bottom fingers of the two adjoining elements forms a central support. There is also another corresponding region between the bridge and the other element where the top finger, although it supports the mortar and frame above, is not itself supported by the chamber sections underneath. As mentioned above and illustrated in embodiments shown in the drawings, it is preferred if the fingers are horizontally aligned.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

**Claims**

1. A riser for a chamber, the riser comprising at least one side element and at least one corner element, each element having two ends and each end being provided with one or more fingers to interdigitate with the fingers of an adjacent one of said elements, whereby said elements are arrangeable to form a closed ring section in any one of at least two dispositions, in which dispositions said fingers interdigitate with one another to a maximal extent in a first, small-size of said two dispositions or to a minimal extent in a second, large-size of said two dispositions, said elements being moved between said dispositions in a direction parallel said fingers.

2. A riser as claimed in claim 1, in which the or each side element comprises said corner element.

3. A riser as claimed in claim 1 or 2, in which said corner elements are L-shaped, having a long side-arm connected with a short end-arm.

4. A riser as claimed in claims 2 and 3, in which four corner elements are provided to form a complete rectangle.

5. A riser as claimed in claim 4, in which said corner elements are in two pairs, the pairs differing from one another in the arrangement of their respective fingers and whereby the long arms of one pair of elements interdigitate with the long arms of the other pair, and the short arms of one pair interdigitate with the short arms of the other.

6. A riser as claimed in claim 5, in which the long arm of one pair does not interdigitate with the short arms of the other pair.

7. A riser as claimed in any of claims 3 to 6, in which the possible extent of interdigitation of the side-arms is greater than the possible extent of interdigitation of the end arms.

8. A riser as claimed in any preceding claim, in which said fingers interdigitate transversely across said direction, whereby between adjoining elements, one provides an outside finger, with respect to an outside edge of the riser, and the other provides an inside finger.

9. A riser as claimed in any preceding claim, in which each element has two fingers at each of its ends, an outside finger and a middle finger, or an inside finger and a middle finger.

10. A riser as claimed in claims 6 and 9, in which the corner elements of one of said pairs has outside fingers and middle fingers, and the corner elements of the other of said pairs has inside fingers and middle fingers.

11. A riser as claimed in any of claims 1 to 8, in which each element comprises a single central finger at one end and two outside fingers at its other end.

12. A riser as claimed in any preceding claim, in which said fingers are rectangular in section so as to slide against one another, and to support one another, when interdigitated.

13. A riser as claimed in any preceding claim, in which said minimal extent of interdigitation includes a degree of interdigitation, whereby there is no straight-line gap from inside to outside the riser between the ends of adjacent elements.

14. A riser as claimed in any preceding claim, in which first ones of said fingers at at least one end of said side element comprise dovetailed bulges adapted to locate in corresponding recesses of second ones of fingers on said corner element in both said maximal and minimal dispositions.

15. A riser as claimed in any preceding claim, in which said riser elements are provided with surface features to improve adhesion thereto by cement mortar.

16. A riser as claimed in any preceding claim, in which said riser elements further comprise location lugs that are arranged so as to correspond with surface features of a chamber for which the riser is intended to fit.

17. A riser as claimed in claim 16, in which said lugs, when the riser is fitted on the chamber, are adapted to engage with said surface features and lock the riser laterally on the top of the chamber.

18. A riser as claimed in claim 16 or 17, in which said lugs comprise pegs.

19. A riser as claimed in claim 16 or 17, in which said lugs comprise apertures adapted to receive pegs.

20. A combination of a chamber and a riser therefor as claimed in any preceding claim, the chamber comprising walls having a rectangular-ring shaped top edge.

21. A combination as claimed in claim 20, the riser being as claimed in claim 17, 18 or 19, and in which the chamber has surface features engaged by said lugs of the corner and side elements of the riser, whereby lateral movement of the riser elements and chamber is prevented.

22. A combination as claimed in claim 21, in which said lugs comprise pegs in a bottom surface of said elements and said surface features of the chamber comprise apertures in said top edge.

23. A combination as claimed in claim 22, in which each element has at least two lugs.

24. A combination as claimed in claim 22 or 23, in which said elements each have apertures in a top surface of said elements, whereby further elements of another riser as claimed in claim 14 stacked on said combination are laterally locked with respect to the riser of the combination by interengagement of said pegs of said further elements and said apertures on the riser below.

32a

34

38

39

30

36

41

32b

A

39

38

B

32b

a

41

40

b

32a

**Fig. 1**

32a

32a

34b

B₁

30'

40

36a

34a

32b

a

36b

A₁

A+a-C$_A$

38

32b

x

B+b-C$_B$

36b

36a

C$_A$

Y

34a

C$_B$

34b

b

32a

**Fig. 2**

Fig. 3

EP 1 916 342 A1

34d
60
56
34

**Fig. 5a**

58
56

**Fig. 5b**

30'

5a

50

34b
34a
50
32'a
50a
34'
32b'

**Fig. 4a**

34'

30'

50

5b

50

52
34b

34a
50a
54

**Fig. 4b**

Fig. 6b

Fig. 6a

Fig. 7a

Fig. 7b

14

**European Patent Office**

**EUROPEAN SEARCH REPORT**

Application Number

EP 06 25 5494

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 52 019453 A (HAKKO CO)<br>14 February 1977 (1977-02-14)<br>* abstract; figures 1,2 *<br>----- | 1-19<br><br>20-24 | INV.<br>E02D29/14<br>E02D29/12<br>H02G9/10 |
| A<br>Y | US 5 482 400 A1 (BAVINGTON GREGORY F [CA])<br>9 January 1996 (1996-01-09)<br>* column 4, lines 18-25,41-64; figures 1,5-7 *<br>----- | 1-19<br><br>20-24 | |
| X | US 5 221 155 A1 (NEIL RONALD E [US])<br>22 June 1993 (1993-06-22)<br>* column 1, lines 35-45; figures 4-6 *<br>----- | 1,2 | |
| A | GB 1 064 638 A (BOWMAN HAROLD M)<br>5 April 1967 (1967-04-05)<br>* page 1, line 42 - line 52; figures 1-3 *<br>----- | 1-24 | |
| A | JP 2005 171709 A (TAITOO KOGYO KK; HANEX CO LTD; FUJIMURA FUME KAN KK)<br>30 June 2005 (2005-06-30)<br>* abstract; figures 4,5 *<br>----- | 1-24 | TECHNICAL FIELDS SEARCHED (IPC) |
| A | US R E34 550 E (BOWMAN HAROLD M [US])<br>22 February 1994 (1994-02-22)<br>* abstract; figure 15 *<br>----- | 1-24 | E02D<br>H02G<br>E03B |
| A | FR 1 262 314 A (VANDENESCH A; DE VAUBLANC F) 26 May 1961 (1961-05-26)<br>* column 2, lines 27-41; figures 1,4 *<br>----- | 1-24 | |

The present search report has been drawn up for all claims

| Place of search | Date of completion of the search | Examiner |
|---|---|---|
| The Hague | 23 March 2007 | Leroux, Corentine |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 06 25 5494

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2007

| Patent document cited in search report | | Publication date | Patent family member(s) | | Publication date |
|---|---|---|---|---|---|
| JP 52019453 | A | 14-02-1977 | JP | 970636 C | 31-08-1979 |
| | | | JP | 54003552 B | 23-02-1979 |
| US 5482400 | A1 | | NONE | | |
| US 5221155 | A1 | | NONE | | |
| GB 1064638 | A | 05-04-1967 | NL | 274645 A | |
| JP 2005171709 | A | 30-06-2005 | NONE | | |
| US RE34550 | E | 22-02-1994 | NONE | | |
| FR 1262314 | A | 26-05-1961 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*